# EUROPEAN PATENT APPLICATION

(11) **EP 0 589 138 A2**
(43) Date of publication of application: **30.03.1994**
(21) Application number: 93106493.5
(22) Date of filing: 21.04.1993
(51) Int. Cl.: F16K 41/00, F16J 15/18

(54) **Spring loaded injectable packing fitting**

(30) Priority: 10.09.1992 US 942940
(71) Applicant: ORBIT VALVE COMPANY, Little Rock, Arkansas 72219-3520 (US)
(72) Inventor: Stephan, David, North Little Rock, Arkansas 72216 (US)
(74) Representative: Goddar, Heinz J., Dr.

(57) **Abstract**

A packing arrangement for a shaft within a body, particularly for a valve shaft (20) within a valve bonnet (22), providing a packing chamber (30) between the valve stem (20) and the valve bonnet (22) and a spring loaded packing injector (60) having a packing material reservoir (94) at a leading end thereof. The packing injector (60) provides a cylinder (62) capped by a nozzle (66). The nozzle (66) screws into a packing port (68) of the valve (10). The injector (60) provides a piston (80) mounted at a front end of a rod (82). The piston (80) fits tightly and reciprocally within the nozzle (66). The reservoir (94) is defined by the nozzle (66) and piston (80). The rod (82) protrudes out of a back end (72) of the cylinder (62), indicating the amount of packing material (55) residing within the reservoir (94) in the packing injector (60). The injector (60) replenishes the packing material (55) normally lost during operation of the valve (10).

## Description

### BACKGROUND OF THE INVENTION

The present invention relates to packing for a shaft for sealing against leakage along a surface of the shaft, in particular to a valve stem mounted within a valve bonnet.

During operation of many different types of valves, a valve stem axially translates up and down or rotationally within a valve bonnet. The valve stem proceeds from a position exposed to the fluid under control by the valve outwardly to where the valve can be actuated by external forces, such as a manual valve hand wheel or an automatic valve actuator or hydraulic dampening means or the like.

To seal between the valve stem and the valve bonnet a packing is used. The packing can comprise a stack of rings, advantageously, a V-shape or chevron-shape can be used. The stack of rings is compressed axially to expand to seal against both the valve bonnet inside surface and the outside surface of the valve stem. In addition to the rings which can be made of teflon or the like, a fluid packing or "injectable packing" can be used. Injectable packing is known and can be a mixture of shredded Teflon and grease having a flowable viscosity. Other known commercially available injectable packings having different components can also be used.

With the frequent translation of the valve stem through the packing region, the valve stem movement transports incremental amounts of the injectable packing out the packing region which causes loss of packing material, a reduction in packing pressure, and a reduction in sealing effectiveness.

### SUMMARY OF THE INVENTION

The present invention provides a packing fitting and accessory design which will maintain sufficient packing chamber pressure for satisfactory valve operation by providing a constant injection of packing material.

The packing fitting is composed of four main parts, a sleeve or cylinder, a piston assembly, a base having a nozzle, and a spring. The piston assembly is located in the sleeve and has a piston head at a lead end, an annular flange in a middle region and a rod protruding from the housing at a back end. The spring is mounted coaxially around the rod within the sleeve. The spring can be a stacked arrangement of disc springs. Assembly of the fitting compresses the spring between a rim of the sleeve and the flange. The fitting is then installed into the valve by screwing the nozzle into a port provided on the valve located at a packing chamber.

Injectable packing is forced into the packing chamber from a fill fitting which fills the packing chamber with injectable packing and eventually forces the piston of the packing fitting rearwardly, compressing the spring and filling a fitting reservoir located within the nozzle. The piston is fashioned to interfit closely within the reservoir section of the nozzle. The piston has a sealing ring to prevent packing from entering the sleeve. The spring thus exerts a relatively constant pressure on the packing in the reservoir which maintains packing pressure within the packing chamber.

The movement of the piston during this operation can be seen by an observer, as the extension rod protrudes from a back side of the sleeve outwardly. The extent protrusion of the rod also indicates to the trained observer how much packing material remains in the reservoir.

### BRIEF DESCRIPTION OF THE DRAWINGS

Figure 1 shows a valve utilizing the packing of the present invention; and
Figure 2 shows an enlarged partial sectional view of the valve of Figure 1.

### DETAILED DESCRIPTION OF THE PREFERRED EMBODIMENTS

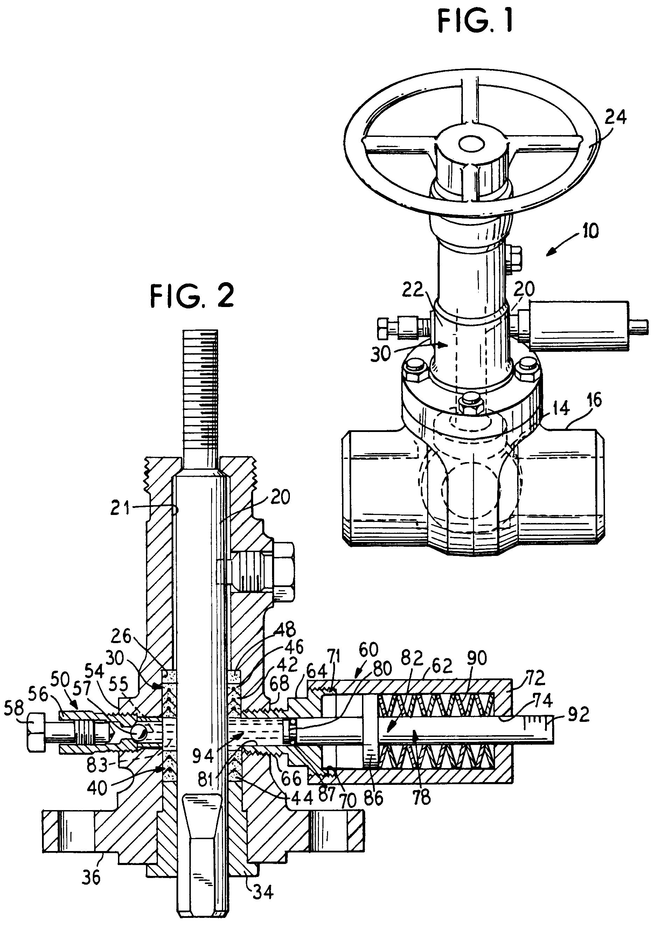

Figure 1 shows a valve 10 having a valve element 14 for controlling fluid within a valve body 16. The valve element 14 is connected by a valve stem or shaft 20 which is housed within a bonnet 22 and is connected at an opposite end to an actuator 24. An annular space 26 between the valve stem 20 and an inside surface of the bonnet 22 is sealed by a packing chamber 30 described more fully with regard to Figure 2.

The packing chamber 30 comprises at one end a bushing 34 which screws into (not shown) the bonnet 22 or is clamped between a bottom flange 36 of the bonnet 22 and the valve body 16. On an opposite side of the bushing is arranged a stack of packing rings or seal rings 40. Advantageously, the stack 40 comprises a number of chevron-shaped or V-shaped rings 42 and a lead ring 44 and a trailing ring 46 of V-shape on one side and flat sides facing away from the V-shaped rings 42. On an opposite end of the stack 40 from the bushing is arranged an extrusion ring 48 which retains the rings within the packing chamber 30.

At a point along the bonnet length corresponding to the packing chamber 30 is a fill fitting 50. The fill fitting 50 provides an input port 54 for injecting packing 55 under pressure. The fitting 50 provides a fill nozzle 56 threaded into the port 54 which holds a ball check valve 57 in place. The check valve 57 permits packing entry, but not exit from the port 54. A plug 58 threadingly closes the fill nozzle 56 after filling operation is complete.

At a second point along a length of the bonnet 22 corresponding to the packing 30 is a packing injector 60. The packing injector comprises a sleeve or cylinder 62 mounted to a base 64 which provides a nozzle 66 screwed into a second input port 68 of the bonnet 22. The sleeve 62 has a threaded open end 70 which is closed by being screwed onto external threads provided around a back end 71 of the base 64. The sleeve 62 has at an opposite end a back wall 72 which provides centrally thereof an aperture 74. Within the injector is a piston assembly 78 having a piston head 80 at a front end interfit tightly within a bore 81 of the nozzle 66, a piston rod 82 along its length, and an annular flange 86 arranged on the rod 82 within the cylinder 62. The piston head 80 provides an O-ring type or molded cup-type seal ring 87 to seal against the bore 81. A spring 90 is arranged within the cylinder 62 on a backside of the annular flange 86 and surrounding the rod 82. The spring 90 can be a stacked series of disc springs. The rod 82 proceeds along a length of the cylinder 62 and is protrudable outwardly through the aperture 74.

The operation of the invention is as follows. Injectable packing 55 under pressure is communicated through the fill fitting 50 into the packing chamber 30. A central axial volume 83 is free of rings 40. The packing fills the central axial volume 83 and proceeds through the nozzle 66 and abuts the piston head 80 to translate the rod 82 rearwardly, compressing the spring 90 between the flange 86 and the back wall 72 of the cylinder. The packing under pressure in the central axial volume 83 seals between the bonnet surface 21 and the shaft 20 and also energizes the seal rings 40, i.e., by pressure, causes the V-shaped rings to open up and seal between the surface 21 and the shaft 20. The rod 82 protrudes outwardly of this aperture 74 which gives visual indication as to the sufficiency of the filling of the nozzle 66 with packing material. As packing material is lost along the shaft outwardly of the packing area 30 during use, the spring 90 maintains a force on the piston head 80 pressurizing the packing. Thus, the packing remains under spring induced pressure and lost packing from the volume 83 can be replenished from the packing held within the nozzle 66. Thus, the bore 81 of the nozzle 66 and the piston head 80 define a packing reservoir 94.

Graduations 92 can be marked on the protruding rod 82 to indicate the current packing supply of the reservoir 94.

Although the present invention has been described with reference to a specific embodiment, those of skill in the art will recognize that changes may be made thereto without departing from the scope and spirit of the invention as set forth in the appended claims.

The features disclosed in the foregoing description, in the claims and/or in the accompanying drawings may, both, separately and in any combination thereof, be material for realizing the invention in diverse forms thereof.

## Claims

1. A sealing arrangement for a shaft surrounded by a body forming a volume between said shaft and said body, comprising:
a means for injecting packing material into said volume; and
a packing injector providing a reservoir of packing material in flow communication with said volume, and a piston means for exerting a pressure on said packing in said reservoir.

2. The sealing arrangement according to claim 1, wherein said packing injector provides a housing and said piston means comprises a piston head urged against said packing material in said reservoir by a spring within said housing.

3. The sealing arrangement according to claim 2, wherein said piston head is arranged on a first end of a rod, said rod extending a length of said housing and protrudable outwardly of said housing to give visual indication of the location of the piston head.

4. The sealing arrangement according to claim 2, wherein said housing comprises a cylindrical sleeve having a back wall, said piston head is arranged on a leading end of a rod, and said rod provides a flange arranged moveable within the sleeve, and said spring is arranged between said flange and said back wall of said sleeve.

5. The sealing arrangement according to claim 1, wherein said means for injecting comprises a packing fitting flow connected to said volume.

6. The sealing arrangement according to claim 1 further comprising a stack of packing rings arranged coaxially with said shaft and compressed against an inside surface of said body, within said volume.

7. The sealing arrangement according to claim 1, wherein said packing injector comprises a housing having a bore defining at least partially said reservoir, and said piston means comprises a piston head closely fitted within said bore and said piston head comprises a seal ring for sealing packing material from leaking from said reservoir past said piston head.

8. The sealing arrangement according to claim 1, wherein said packing injector comprises a housing; and
said piston means comprises:
a piston head closely fitted within a bore open to said reservoir;
a rod arranged longitudinally within said housing and protrudable outward of a rear end of said housing;
an O-ring seal arranged on a backside of a leading end of said piston;
a spring retaining shoulder portion mounted on said rod; and
said spring means comprises a series of spring discs arranged between said spring retaining shoulder and a backside of said housing.

9. The sealing arrangement according to claim 1, wherein said packing injector provides a threaded perimeter for screw installing said packing injector into a packing port of said body.

10. For a valve having a valve stem moveable within a valve bonnet, wherein said valve bonnet has an inside surface forming a packing volume between said valve bonnet and said valve stem, a packing arrangement comprising:
a port for injecting packing material into said volume; and
a packing injector mounted to said bonnet and having a resiliently movable means for compressing said packing material residing within said volume.

11. The packing arrangement according to claim 10, wherein said packing injector further comprises a reservoir of packing material on a front side of said resiliently movable means communicating packing material into said volume.

12. The packing arrangement according to claim 11, wherein said packing injector provides an external visual indicator of the packing material residing within said reservoir.

13. The packing arrangement according to claim 10, wherein said port for injecting comprises a packing fitting mounted to said bonnet and providing a separate pathway for packing flow into said volume.

14. The packing arrangement according to claim 13, wherein said packing fitting comprises a check valve.

15. The packing arrangement according to claim 10, wherein said packing injector comprises:
a cylindrical housing having a back wall with an aperture therethrough and a front end having a cylindrical bore open to said volume;
a rod mounted coaxially within said cylindrical housing and protrudable out of said aperture;
a piston mounted to said rod and fit tightly within said bore;
a spring retaining shoulder mounted at a middle position of said rod within said housing; and
a spring mounted coaxially around said rod between said spring retaining shoulder and said back wall, biasing said rod and said piston frontwardly toward said bonnet.

16. The packing arrangement according to claim 15, wherein said spring comprises a stack of spring discs.

17. The packing arrangement according to claim 10, wherein said packing injector comprises a threaded nozzle portion at a front end thereof for installing said packing injector into a threaded port of said bonnet, said movable means residing closely and reciprocally within an inside surface of said nozzle.

18. The packing arrangement according to claim 10 further comprising a stack of packing rings located coaxially around said rod within said volume.
